# EUROPEAN PATENT SPECIFICATION

(11) **EP 3 889 447 B1**
(45) Date of publication and mention of the grant of the patent: **15.01.2025**
(21) Application number: 20188541.5
(22) Date of filing: 30.07.2020
(51) Int. Cl.: F16B 5/02, F16B 37/02, F16B 37/08

(54) **A FASTENER**
BEFESTIGUNGSMITTEL
DISPOSITIF DE FIXATION

(30) Priority: 01.04.2020 EP 20167583
(43) Date of publication of application: 06.10.2021
(73) Proprietor: Illinois Tool Works INC., Glenview, IL 60025 (US)
(72) Inventor: CANADO DELGADO, Alexis, Glenview, IL 60025 (US); ELLIS, Richard, Glenview, IL 60025 (US)
(74) Representative: HGF

(56) References cited:
- EP-A2- 1 182 369
- DE-A1- 19 607 000
- US-A1- 2006 245 843

## Description

### Technical Field of Invention

The present invention relates to a fastener for vehicle parts. In particular, the invention relates to a fastener securing a heat shield to a threaded bolt of a vehicle body that is suitable for assembly, as well as, disassembly, and even more particularly, a fastener securing a heat shield to a threaded bolt of a vehicle body that is suitable for high-speed automatic assembly.

### Introduction

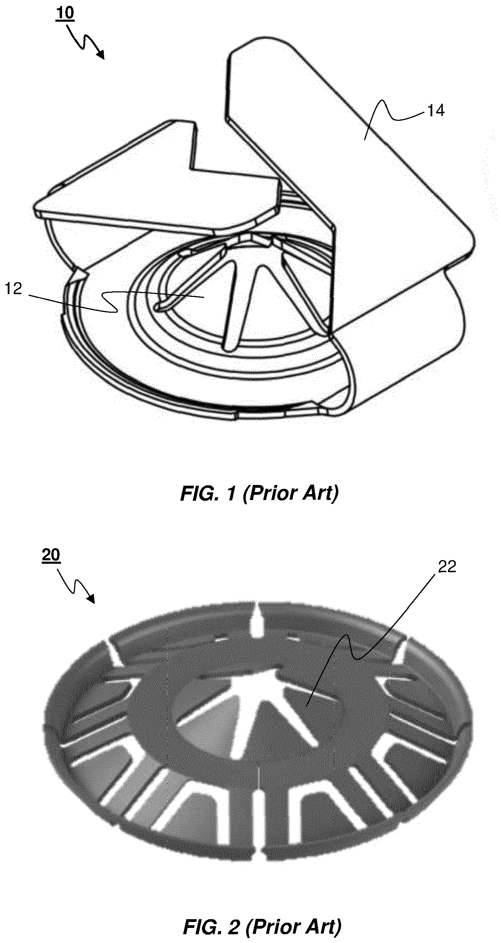

Many variations of clips and nut, or other fasteners, are widely used in the automobile industry to fasten specific parts, panels or other accessories in a vehicle. Attachment clips may be used to attach car components, such as a heat shield plate for insulating heat of a muffler underside the vehicle, that are apt to be affected by heat. Figures 1 and 2 show examples of two different clips 10, 20 commonly used to attach a heat shield plate to a suitable bolt projecting through the heat shield plate to mountably engage with the clip 10, 20. Here, when fitting the clip 10, 20, the installer simply pushes the slanted teeth or claws 12, 22over the shank of the bolt or screw so as to funnel the clip into a centralised position and aligning the bolt or screw with the clip 10, 20. Subsequently, the claws or teeth 12, 22 are pushed over the thread ridges t of the shank until the clip is attached to the heat shield panel. In this engaged position, the claws or teeth 12, 22 axially urge the clip 10, 12 toward the heat shield panel by the elastic forces of the biased claws or teeth 12, 22. Additional retention members 14 further engage with the threaded shank portion to lock the clip into position, though, the leading edge of the retention members 14 tangentially engages with the thread portion of the shank only providing a single point of contact between he retention members 14 and the threaded shank of the bolt or screw making it a relatively unstable and insecure connection.

The example clip of Figure 2 simply relies on the relatively insubstantial claws or teeth 22 to lock the clip 20 into position and bias the clip 20 onto the heat shield panel potentially accepting the loosening or even loss of the clip 20 because of the relatively weak connection.

Thus, currently available fastening clips, such as the clips 10, 20 illustrated in Figure 1 and 2, tend to fail when used for high-speed automated assembly, because such clips are difficult to consistently centre and securely lock on a respective bolt or screw at really fast mounting speed (e.g. due to inaccuracies of the automated system and or installation tool when moved at high speed) causing potential misalignment and even incomplete connections. Another fastening clip is known from US 2006/245843 A1.

Therefore, it is an object of the present invention to provide an improved fastening clip, suitable for automated assembly (especially at high-speed settings), that allows for a more reliable central alignment with the bolt or screw during installation and provides a stronger but demountable connection.

### Summary of the Invention

According to a first embodiment of the invention there is provided a fastening clip for attachment to a threaded elongate fastener, in accordance with claim 1.

This provides the advantage of a fastener suitable for automated installation (e.g. push-in action) that may also be removed without damaging the fastener or attachment bolt. In particular, the unique design of the fastener of the present invention ensures that the part (e.g. heat shield) is not dented or otherwise damaged during installation or disassembly. The resilient retention arms and cooperating end portions provide for a strong connection with the stud or attachment bolt (or screw), while maintaining pressure on the part via the biased retention arms, therefore, mitigating the potentially damaging effect of vibrations. In addition, the frustoconical aperture of the base plate allows for easy and accurate positioning of the fastener on the stud or bolt, especially when mounted automatically in a high-speed action. Apertures have been provided to the retention arms to allow for a temporary attachment to the installation tool (i.e. when moved into position by the tool) via a friction fit between the resilient retention arms and the installation tool which is achieved by the resilient deformability of the retention arms.

Advantageously, each one of said end portions of said resilient retention arms may comprise an engagement member at a distal end adapted to matingly engage with a corresponding thread section of the threaded elongate fastener. Preferably, said engagement member may be formed by an extruded lip formed in line with the orientation of the corresponding thread of the threaded elongate fastener.

This provides the advantage of a considerably improved contact area between the threaded bolt or screw and the retention arm provided by an engagement member that is matingly shaped to a respective thread of the bolt or screw, therefore, providing a stronger and more secure mount.

One of said two cooperating end portions comprises at least one ramp member extending from said distal end in a direction nonparallel to a central longitudinal axis of said end portion of said retention arms, so as to slidingly engage with said distal end of the other one of said two cooperating end portions during movement between said first position and said second position.

This provides the advantage of preventing entanglement between the cooperating retention arms during assembly, especially during high-speed assembly utilising an automated installation system. In particular, the one or two (arranged in parallel, depending on the design of the end portion) ramp member(s) are arranged so as to abuttingly engage with an underside of the end portion of the other retention arm, when in the first position, and slidingly engage with (i.e. slidingly move the end portion of the other retention arm up and over) the other end portion, when moving between the first position and the second position.

Advantageously, each one of said retention arms may comprise at least one reinforcing rib member at least partially extending along said central longitudinal axis of respective said end portions.

This provides an improved stiffness at the end portion of the retention arm, so as to optimise the movement of the engagement members of the end portions along the threaded bolt or screw and strengthen the locking engagement between the engagement members of the end portions and the threaded bolt or screw.

Preferably, said reinforcing rib member may be provided by a stiffening emboss.

Advantageously, each one of said at least one recessed portion may be provided on a lateral edge of a respective one of said two cooperating end portions. Preferably, said recessed portion may be adapted to form an interference fit with a corresponding portion of the installation tool.

Advantageously, a proximal rim of said frustoconical sleeve may be configured to abuttingly engage with said two cooperating end portions when in said second position.

Advantageously, said proximal face may comprise a protruding rim extending at least partially along a peripheral edge of said base plate.

Advantageously, each one of said at least two diametrically opposing resilient retention arms may comprise at least one aperture adapted to receive a corresponding tool for dismounting said fastening clip from the threaded elongate fastener. The aperture(s) provide the advantage of a suitable point of contact for disassembling the fastening clip from the threaded bolt or screw, e.g. by either prying the retention arms out of engagement with the threaded bolt or screw, or by providing a turning handle to unscrew the fastening clip of the threaded bolt or screw, utilising, for example, a screw driver or similar hand tool.

Alternatively, or additionally, said at least two diametrically opposing resilient retention arms may be adapted to operably engage with a socket tool during disassembly of said fastening element from the shaft member of the vehicle part.

Advantageously, said at least two diametrically opposing resilient retention arms may be integral to said base plate. Preferably, said base plate and said at least two diametrically opposing resilient retention arms may be formed from a single piece of material.

Advantageously, said single piece of material is a resilient material.

### Brief Description of the Drawings

Embodiment(s) of the invention will now be described, by way of example only, with reference to the accompanying drawings, in which:
**Figure 1** **(Prior Art)** illustrates a perspective view of an example embodiment of a fastening clip known in the art;
**Figure 2** **(Prior Art)** illustrates a perspective view of another example embodiment of a fastening clip known in the art;
**Figure 3** illustrates a fastening clip in accordance with an example embodiment of the present invention (a) in perspective view, (b) in a side view and (c) in a front view;
**Figure 4** illustrates the fastening clip of Figure 3 removably attached to a suitable installation tool (shown in a transparent form) (a) in a perspective view, (b) in a top view (from the proximal side), (c) a first- and (d) a second close-up perspective view of the friction fit between the installation tool and the retention arm;
**Figure 5** illustrates the installation process utilising an installation tool with the fastening clip of the present invention temporarily attached (a) moving the fastening clip over the threaded bolt or screw and the retention arms in a first position, (b) pushing a plunger of the installation tool down to move the retention arms from the first position towards the second position locking the end portion into engagement with the thread of the bolt or screw, as well as, detaching the retention arms from the installation tool, and (c) removing the installation tool from the fastening clip;
**Figure 6** illustrates another perspective view of (a) the installation tool moving the attached fastening clip over the bolt or screw and (b) a perspective bottom view of the installation tool alone;
**Figure 7** illustrates an unclaimed alternative embodiment of the fastening clip without a ramp member (a) in a perspective (b) in a side view, (c) in a front view and (d) in a top view, and
**Figure 8** illustrates the fastening clip of Figure 7, a corresponding installation tool with removed plunger and an example bolt or screw plate.
**Figure 9** illustrates a perspective view of an unclaimed alternative example embodiment of a fastening clip of the present invention;
**Figure 10** illustrates a bottom view of the unclaimed alternative example embodiment shown in Figure 9;
**Figure 11** illustrates a perspective top view of the fastening clip of Figure 9 during disassembly utilising a standard socket tool (i.e. hexagonal socket);
**Figure 12** illustrates a bottom view of the fastening clip and standard socket tool of Figure 11 during disassembly;
**Figure 13** illustrates a perspective top view of a close-up portion of the fastening clip and standard socket tool of Figure 11 during disassembly showing the disassembly arms operably engaged with the standard socket tool, and
**Figure 14** illustrates a cross-sectional side view of the fastening clip of Figure 9 when in use (i.e. securing a heat shield to a vehicle structure) and before disassembly using the standard socket tool.

### Description

The described example embodiment relates to a fastening clip suitable for securing paraphernalia and accessories, and especially heat shield panels. The embodiment(s) of the invention is(are) normally applied in vehicles. Although the invention is described with respect to vehicles, the invention is not restricted to vehicles altogether, but may also be used in other structures requiring attachment of accessories or peripheral components to a structure.

Certain terminology is used in the following description for convenience only and is not limiting. The words 'right', 'left', 'lower', 'upper', 'front', 'rear', 'upward', 'down' and 'downward', 'top' and 'bottom' designate directions in the drawings to which reference is made and are with respect to the described component when assembled and mounted. The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, relative positional terms, such as, 'distal', 'proximal', 'lateral' and 'medial' are understood in their normal meaning and in relation to a specific element being described. In particular, these terms designate directions in relation to the tool or user end, e.g. proximal is in a direction towards the installation tool or user, wherein distal refers to the direction away from the installation tool or user.

Further, as used herein, the terms 'connected', 'attached', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, 'first', 'second', 'third' etc. merely indicate that different instances of like objects are being referred to and are not intended to imply that the objects so described must be in a given sequence, either temporally, spatially, in ranking or in any other manner.

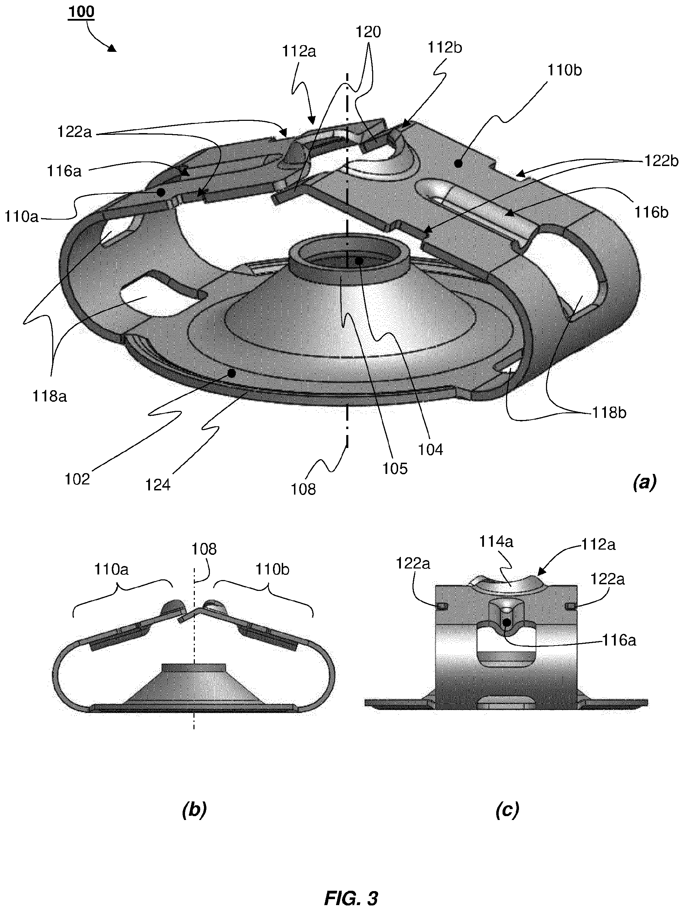

Referring now to Figure 3, a preferred embodiment of the fastening clip 100 of the present invention is manufactured from a single sheet material, such as, for example, a sheet metal and in particular a spring steel that is formed using, *inter alia,* a punch and stamping press. The sheet metal may be heat treated after the punching and/or stamping process so as to form at least resilient retention arms 106a, 106b. However, it is understood by the person skilled in the art that any other suitable material or manufacturing process may be used, such as, for example, a resilient polymer or polymer compound using suitable polymer manufacturing processes (thermoforming, injection moulding, extrusion), but also 3D printing manufacturing processes.

The fastening clip 100 comprises a substantially circular base plate 102 having a frustoconical aperture 104 projecting towards an upper or proximal end (i.e. into the direction of the installation tool 200 or user). Two diametrically opposing retention arms 106a, 106b extend from a peripheral edge of the base plate 102 first radially and proximally outward to then invertingly fold back towards a centre axis 108 of the aperture 104 such that the distal end portions 110a, 110b are positioned proximally spaced apart (i.e. on top of) from the frustoconical aperture 104. In this position, the resilient retention arms 106a, 106b are in an unbiased first position with the space between the end portions 110a, 110b defining the axial freedom of movement of the retention arms 106a, 106b between respective first (unlocked) position and second (locked) position. The frustoconical aperture 104 may be provided with a rim 105 adapted to abuttingly engage with any one of the end portions 110a, 110b when in the second position.

Each one of the end portions 110a, 110b is provided with an engagement member 112a, 112b on its distal end (i.e. the distal edge of the retention arms 106a, 106b) comprising of an extruded lip portion 114a, 114b forming a clamping collar adapted to matingly interlock with a corresponding thread section of the connecting stud, bolt or screw 300, i.e. at least an upper edge of the extruded lip portion 114a, 114b or clamping collar is inclined in line with the thread angle of the threaded stud, bolt or screw 300 so as to match the corresponding thread space. Furthermore, the lip portion 114a, 114b is extruded into a frustoconically shaped collar with the narrower edge at the proximal side (i.e. top) of the end portion 110a, 110b, therefore allowing the engagement member 112a to slidingly move over a corresponding thread of the stud, bolt or screw 300 when moving from the first position towards the second position, but block or jam with the thread of the stud, bolt or screw 300 when moved from the second position towards the first position.

Each one of the resilient retention arms 106a, 106b may further comprise a reinforcing rib 116a, 116b configured to structurally stiffen at least a portion of the retention arms 106a, 106b. The reinforcing rib 116a, 116b may be provided along a longitudinal central axis of the end portion 110a, 110b, so as to stiffen that portion of the retention arm 106a, 106b (i.e. only allowing resilient flexure at the bent portion of the retention arms 106a, 106b). Preferably, the reinforcing rib 116a, 116b is provided by stamping a central portion of the end portion 110a, 110b so that the material is protruding on its distal side. However, the stiffening and reinforcement of at least a portion of the retention arms 106a, 106b may be provided by any other suitable structure.

Apertures 118a, 118b may further be provided on each of the retention arms 106a, 106b so as to allow as suitable engagement with at least a hand tool for dismounting the fastening clip 100 from the stud, bolt or screw 300. Any suitable number of apertures 118a, 118b may be used.

In a preferred embodiment of the fastening clip 100 of the present invention, one of the end portions 110a, 110b may comprise at least one ramp member 120 extending from the distal edge of the retention arm 106a, 106b so as to abuttingly engage with an underside of the other retention arm 106a, 106b, when in the first unbiased position. In this particular embodiment, the at least one ramp member 120 is nonparallel with respect to the longitudinal axis of the end portion 110a, 110b such that the distal edge of the other retention arm 106a, 106b slides up and over when the cooperating retention arms 106a, 106b are moved between the first position and the second position (without jamming). It is understood by the person skilled in the art that the at least one ramp member 120 may be at any angle (including an extension parallel to the longitudinal axis of the end portion 110a, 110b) suitable to prevent jamming of the cooperating retention arms 106a, 106b during use.

Each one of the retention arms 106a, 106b further comprises at least one recess portion 122a, 122b adapted to attachingly engage with a corresponding installation tool 200. The recess portion(s) 122a, 122b may be provided on a lateral edge of the end portion 110a, 110b and may be in the form of a simple cut-out or a stepped end section.

The proximal face of the base plate 102 may further comprise a protruding rim 124 along at least a portion of its peripheral edge configured to retainingly position and to centre a corresponding installation tool when attachingly coupled to the fastening clip 100.

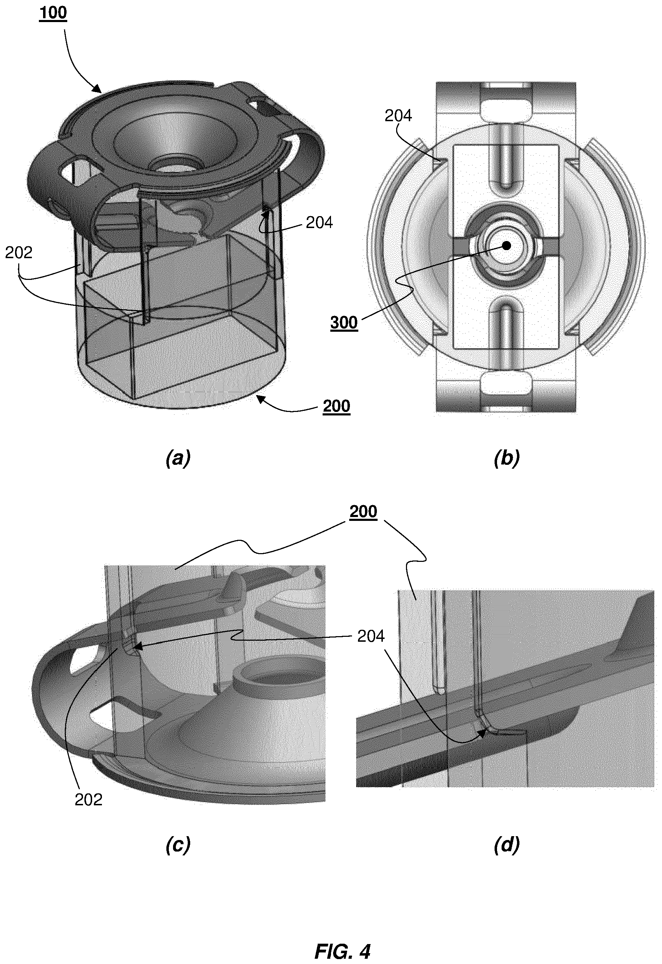

Referring now to Figures 4 to 6, the function of the fastening clip 100 is described when used with a suitable installation tool 200. Here, the installation tool 200 is suitable for high-speed automatic assembly, such as, for example, a system using assembly line robots. However, the basic operation of the fastening clip 100 is the same when assembled manually (e.g. using fingers or any other suitable tool).

Figures 4 (a)-(d) shows an illustration of the fastening clip 100 when attached to a suitable installation tool 200, i.e. before the fastening clip 100 is mounted to the stud, bolt or screw 300. Here, the installation tool 200 comprises suitable recesses 202 forming a chamfered edge (or bevel) 204 configured to engage with a respective edge portion of the recess portion 122a, 122b of the retention arm 106a, 106b. When the installation tool 200 is pushed onto the proximal portion of the fastening clip 100, the resilient retention arms 106a, 106b flex just enough for the edge portion of the recess portion(s) 122a, 122b and the chamfered edge(s) 204 to form a friction or interference fit that is strong enough to attach the fastening clip 100 to the installation tool 200. In this configuration, the installation tool 100 can move with the attached fastening clip 100 to the respective stud, bolt or screw 300.

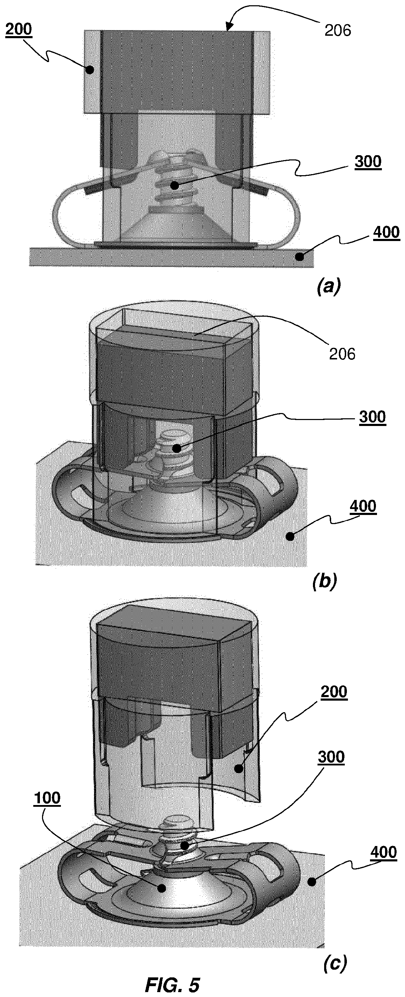

Figure 5 (a) shows the fastening clip 100 when moved into a mounting position on the vehicle part (e.g. heat shield panel 400), where the stud, bolt or screw 300 is guided by and pushed through the frustoconical aperture 104 and the engagement members 112a, 112b abuttingly engage with an end portion of the stud, bolt or screw 300. Once the installation tool 200 has moved the fastening clip 100 onto the stud, bolt or screw 300 a plunger 206 axially pushes the retention arms 106a, 106b from the first unbiased position towards the second biased position by sliding the engagement members 112a, 112b over the thread of the stud, bolt or screw 300. Due to the frustoconical design of the two cooperating engagement members (i.e. the formed clamping claw) 112a, 112b and the bias provided by the resilient retention arms 106a, 106b, the inclined edge of the lip portion 114a, 114b will matingly latch into corresponding thread sections of the stud, bolt or screw 300, when moved towards the second position (see Figure 5 (b)) and released by the plunger 206 (see Figure 5 (c)), locking the fastening clip 100 onto the stud, bolt or screw 300. The bias provided by the locked retention arms 106a, 106b maintains a consistent axial pressure of the fastening clip 100 onto the heat shield panel 400 mitigating any adverse effects caused by vibrations or any other external forces.

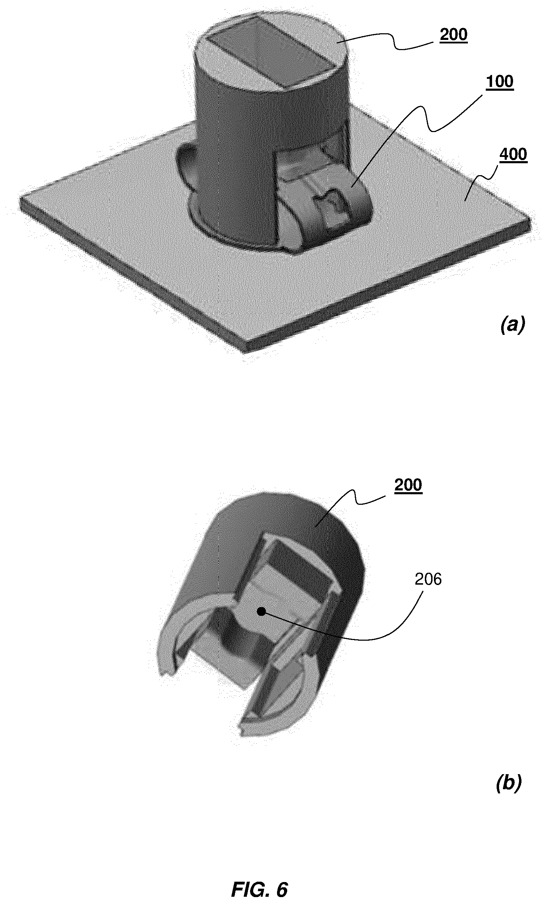

Figure 6 (a) illustrates the assembly setup between the installation tool 200, the fastening clip 100 and the heat shield panel 400, and Figure (b) provides a more detailed view of the installation tool 200, the recesses 202, chamfered edges 204 and plunger 206.

In order to disassemble or remove the fastening clip 100 from the stud, bolt or screw 300 of the heat shield 400, a user may simple pry the retention arms 106a, 106b away from the threaded stud, bolt or screw 300 using, for example, a screw driver or any other tool that fits into the apertures 118a, 118b, so that the biased retention arms 106a, 106b snap back into a respective unbiased position. Alternatively, another suitable tool may be used to push through both apertures 118a and 118b so as to provide a rotary handle (or rotary lever) in order to unscrew the fastening clip 100 from the threaded stud, bolt or screw 300. This allows the removal of the fastening clip 100 without causing damage to the stud, bolt or screw, heat shield panel or the fastening clip 100 itself, therefore, providing for a fasting clip 100 that can be reused.

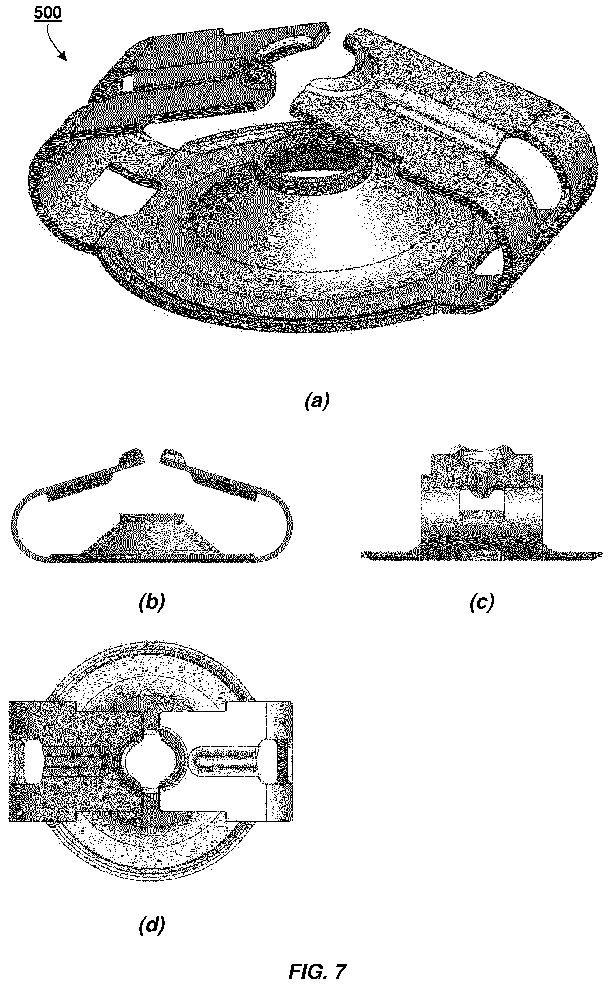

Referring now to Figures 7 (a), (b) and (c), an unclaimed alternative embodiment of the fastening clip 500 is shown comprising all the features of the first embodiment of the fastening clip 100 but without the ramp member(s) 120.

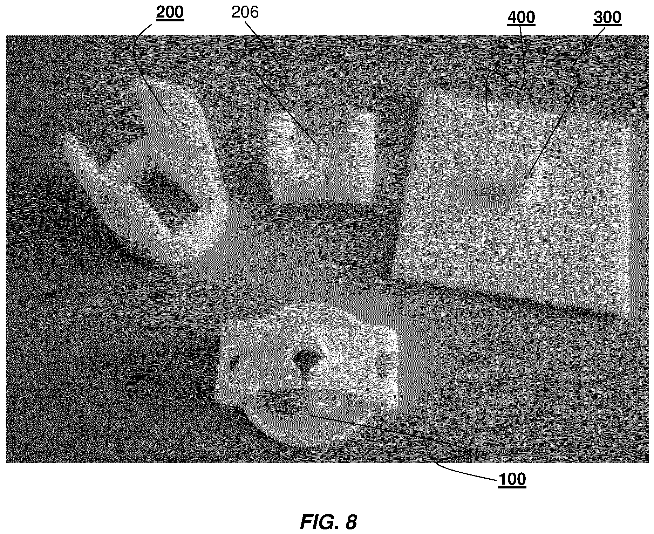

Figure 8 illustrates an embodiment of the fastening clip 500, a panel portion 400 having a threaded bolt 300 and an installation tool 200 with a removed plunger 206 made from a polymer.

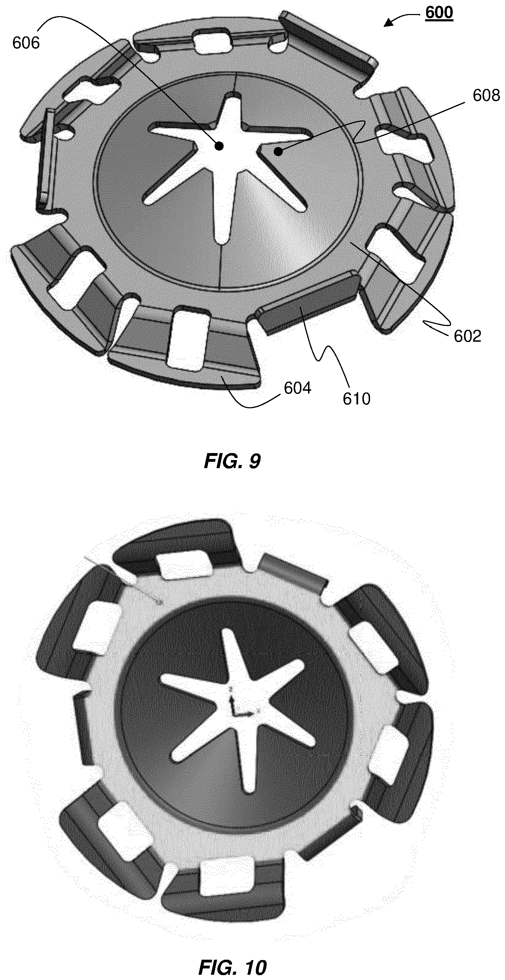

Referring now to Figures 9 to 14 an unclaimed, alternative embodiment of the fastening clip 600 comprises a substantially circular frustoconical clamping disk, having an annular plate member 602 with a plurality of radially outwardly extending circumferentially segmented resilient fold members 604 folded axially downward from a peripheral edge of the annular plate member 602, and a central aperture 606, having a plurality of circumferentially segmented conically upwardly extending teeth 608 adapted to couplingly engage with a shaft member 300 (stud, bolt or screw) of the vehicle part during use. The alternative embodiment of the fastening clip 600 is characterised by at least three resilient circumferentially equidistantly spaced apart disassembly members 610 protruding axially upwards from the peripheral edge of the annular plate member 602, which are adapted to operably engage with a socket tool 700 during disassembly of the fastening element 600 from the shaft member 300 of the vehicle part.

The at least three circumferentially equidistantly spaced apart disassembly members provide the advantage that the fastening clip 600 can be easily removed from its locking engagement with the shaft member 300 (e.g. threaded stud, bolt or screw) of the vehicle part or structure, by simply operably engaging with a suitable socket tool 700, i.e. a hexagonal socket tool, where the disassembly members 610 are pressed into the hexagonal space of the socket tool 700 so as to form a resilient friction fit and allowing a torque force provided via the socket tool 700 to be imparted to the fastening clip 600 to then be unscrewed from the threaded bolt 300 during disassembly (manually or automatically). Thus, the alternative fastening clip 600 allows repeated use, as well as, a minimised risk of damaging the fastener and/or threaded bolt 300 during disassembly.

During use, the fastening clip 600 can be easily mounted according to known assembly procedures, e.g. with an automated push-in movement via a suitable tool or manually. In order to remove (disassemble) the fastening clip 600 from the locking engagement with the threaded bolt 300, a suitable standard socket tool 700 is pushed into engagement with the at least three disassembly members 610, such that a torque force provided to the socket tool 700 can be applied to the fastening clip 600 and unscrew it from the threaded bolt or shaft 300.

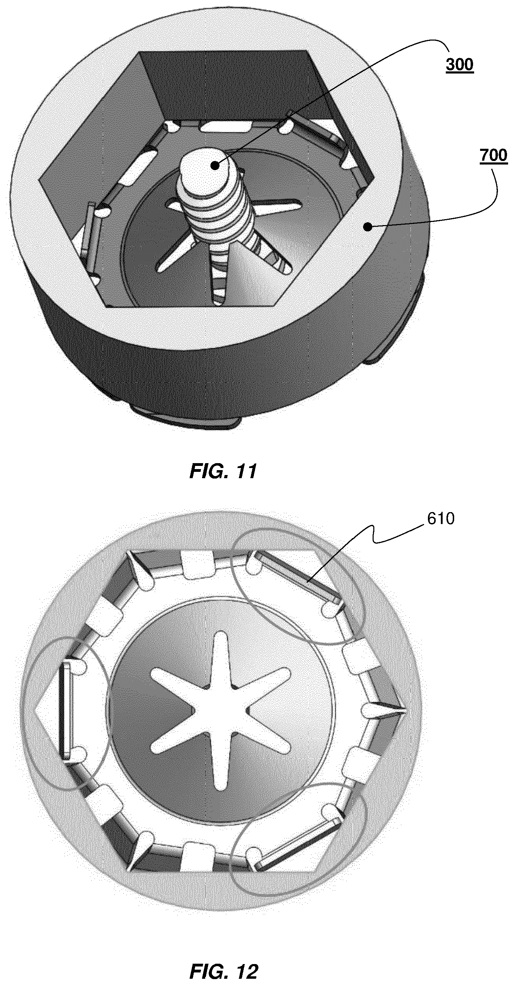

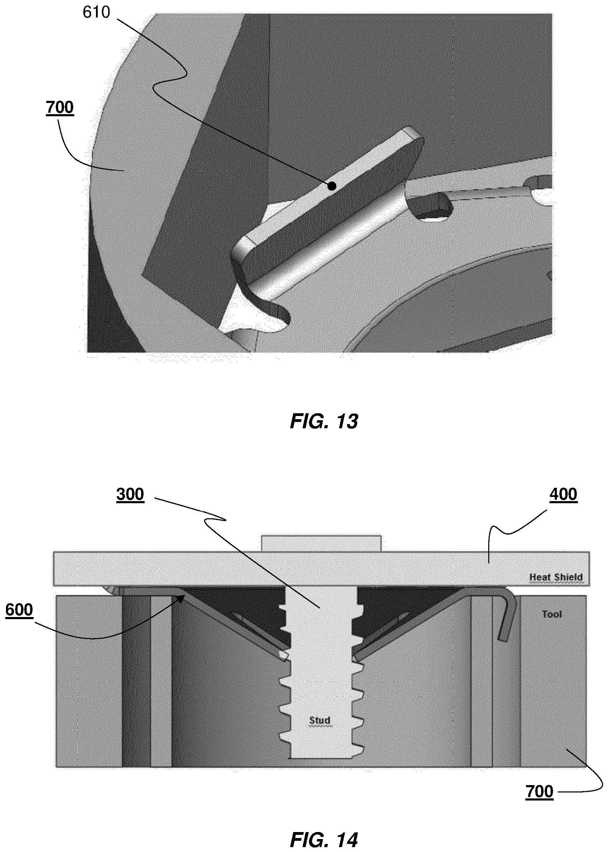

As shown particularly in Figure 12, as well as, in a close-up view of the disassembly members 610 in Figures 13, the disassembly members are "lodged" into the hexagonal socket 700, so that lateral edges of each one of the disassembly members 610 is abuttingly engaged with an inner surface of the hexagonal socket tool 700 (i.e. fit across the corners), allowing torque to be imparted from the tool 700 onto the disassembly members 610 and fastening clip 600.

Figure 14 illustrates a cross-section of the fastening clip 600 mounted to the heat shield panel 400 and attached to the socket tool 700 via the disassembly members 610.

It will be appreciated by persons skilled in the art that the above embodiments have been described by way of example only and not in any limiting sense, and that various alterations and modifications are possible without departing from the scope of the invention as defined in the appended claims.

## Claims

1. A fastening clip (100) for attachment to a threaded elongate fastener (300), comprising:
a base plate (102), having a proximal face and a distal face, comprising a central through hole (104) defining a centre axis (108) and forming a frustoconical sleeve extending away from said proximal face along said centre axis (108) and which is configured to guidingly receive the threaded elongate fastener (300);
at least two diametrically opposing resilient retention arms, each one extending from a peripheral edge of said base plate (102) radially outward and invertingly folding back towards said centre axis (108), so as to provide two cooperating end portions (110a, 110b) operable to resiliently move substantially parallel to said centre axis (108) between an unbiased position, where said end portions (110a, 110b) are positioned proximally spaced apart from said frustoconical sleeve, and wherein said resilient retention arms have a space between said two cooperating end portions (110a, 110b) defining an axial freedom of movement of said resilient retentions arms, and a biased position, where the end portions (110a, 110b) are configured to retainingly and biasingly engage with a threaded elongate fastener when inserted through said central through hole, and
wherein each one of said two cooperating end portions (110a, 110b) further comprises at least one recessed portion (122a, 122b) adapted to receivingly and attachingly engage with a corresponding installation tool (200),
**characterised in that** one of said two cooperating end portions (110a, 110b) comprises at least one ramp member (120) extending from a distal end in a direction nonparallel to a central longitudinal axis of said end portion (110a, 110b) of said retention arms so as to slidingly engage with a distal end of the other one of said two cooperating end portions (110a, 110b) during movement between said unbiased position and said biased position.

2. A fastening clip according to claim 1, wherein each one of said end portions (110a, 110b) of said resilient retention arms comprises an engagement member (112a, 112b) at said distal end adapted to matingly engage with a corresponding thread section of the threaded elongate fastener (300).

3. A fastening clip according to claim 2, wherein said engagement member (112a, 112b) is formed by an extruded lip (114a, 114b), forming a clamping collar adapted to matingly interlock with a corresponding thread section of a threaded elongate fastener (300), wherein said extruded lip portion (114a, 114b) is extruded into a frustoconically shaped collar with a narrower edge of said frustroconically shaped collar at a proximal side of said end portions (110a, 110b).

4. A fastening clip according to any one of the preceding claims, wherein each one of said retention arms comprises at least one reinforcing rib member (116a, 116b) at least partially extending along said central longitudinal axis of respective said end portions (110a, 110b).

5. A fastening clip according to claim 4, wherein said reinforcing rib member (116a, 116b) is provided by a stiffening emboss.

6. A fastening clip according to any one of the preceding claims, wherein each one of said at least one recessed portion (122a, 122b) is provided on a lateral edge of a respective one of said two cooperating end portions (110a, 110b).

7. A fastening clip according to claim 6, wherein said recessed portion (122a, 122b) is adapted to form an interference fit with a corresponding portion of the installation tool (200).

8. A fastening clip according to any one of the preceding claims, wherein a proximal rim (105) of said frustoconical sleeve is configured to abuttingly engage with said two cooperating end portions (110a, 110b) when in said biased position.

9. A fastening clip according to any one of the preceding claims, wherein said proximal face comprises a protruding rim (124) extending at least partially along a peripheral edge of said base plate (102).

10. A fastening clip according to any one of the preceding claims, wherein each one of said at least two diametrically opposing resilient retention arms comprises at least one aperture (118a, 118b) adapted to receive a corresponding tool for dismounting said fastening clip (100) from the threaded elongate fastener (300).

11. A fastening clip according to claim 10, wherein said at least two diametrically opposing resilient retention arms are adapted to operably engage with a socket tool during disassembly of said fastening clip (100) from a threaded elongate fastener (300) of a vehicle part.

12. A fastening clip according to any one of the preceding claims, wherein said at least two diametrically opposing resilient retention arms are integral to said base plate (102).

13. A fastening clip according to any one of the preceding claims, wherein said base plate (102) and said at least two diametrically opposing resilient retention arms are formed from a single piece of material.

14. A fastening clip according to claim 13, wherein said single piece of material is a resilient material.

## Patentansprüche

1. Befestigungsklammer (100) zur Befestigung an einem mit Gewinde versehenen länglichen Befestigungselement (300), die aufweist:
eine Basisplatte (102) mit einer proximalen Fläche und einer distalen Fläche, die ein zentrales Durchgangsloch (104) aufweist, das eine Mittelachse (108) definiert und eine kegelstumpfförmige Hülse bildet, die sich von der proximalen Fläche entlang der Mittelachse (108) weg erstreckt, und das so konfiguriert ist, dass es das mit Gewinde versehene längliche Befestigungselement (300) führbar aufnimmt;
zumindest zwei diametral gegenüberliegende elastische Haltearme, wobei sich jeder davon von einer Umfangskante der Basisplatte (102) radial nach außen erstreckt und in Richtung der Mittelachse (108) umkehrend zurückklappt, um zwei zusammenwirkende Endabschnitte (110a, 110b) bereitzustellen, die so betreibbar sind, dass sie sich im Wesentlichen parallel zu der Mittelachse (108) zwischen einer nicht vorgespannten Position, in der die Endabschnitte (110a, 110b) von der kegelstumpfförmigen Hülse proximal beabstandet positioniert sind und in der die elastischen Haltearme einen Raum zwischen den zwei zusammenwirkenden Endabschnitten (110a, 110b) aufweisen, der eine axiale Bewegungsfreiheit der elastischen Haltearme definiert, und einer vorgespannten Position elastisch bewegen, in der die Endabschnitte (110a, 110b) konfiguriert sind, um mit einem mit einem Gewinde versehenen länglichen Befestigungselement, wenn es durch das zentrale Durchgangsloch eingeführt ist, in haltendem und vorspannendem Eingriff zu stehen, und
wobei jeder der zwei zusammenwirkenden Endabschnitte (110a, 110b) ferner zumindest einen ausgesparten Abschnitt (122a, 122b) aufweist, der dazu ausgelegt ist, ein entsprechendes Installationswerkzeug (200) im Eingriff aufzunehmen und anzubringen,
**dadurch gekennzeichnet, dass** einer der beiden zusammenwirkenden Endabschnitte (110a, 110b) zumindest ein Rampenelement (120) aufweist, das sich von einem distalen Ende in einer Richtung erstreckt, die nicht parallel zu einer zentralen Längsachse des Endabschnitts (110a, 110b) der Haltearme ist, um während einer Bewegung zwischen der nicht vorgespannten Position und der vorgespannten Position mit einem distalen Ende des anderen der zwei zusammenwirkenden Endabschnitte (110a, 110b) in Gleiteingriff zu gelangen.

2. Befestigungsklammer nach Anspruch 1, wobei jeder der Endabschnitte (110a, 110b) der elastischen Haltearme ein Eingriffselement (112a, 112b) an dem distalen Ende aufweist, das dazu ausgelegt ist, mit einem entsprechenden Gewindeabschnitt des mit Gewinde versehenen länglichen Befestigungselements (300) in Gegeneingriff zu gelangen.

3. Befestigungsklammer nach Anspruch 2, wobei das Eingriffselement (112a, 112b) durch eine extrudierte Lippe (114a, 114b) gebildet ist, die einen Klemmkragen bildet, der dazu ausgelegt ist, sich mit einem entsprechenden Gewindeabschnitt eines mit einem Gewinde versehenen länglichen Befestigungselements (300) zu verriegeln, wobei der extrudierte Lippenabschnitt (114a, 114b) an einer proximalen Seite der Endabschnitte (110a, 110b) in einen kegelstumpfförmigen Kragen mit einer schmaleren Kante des kegelstumpfförmigen Kragens extrudiert ist.

4. Befestigungsklammer nach einem der vorhergehenden Ansprüche, wobei jeder der Haltearme zumindest ein Verstärkungsrippenelement (116a, 116b) aufweist, das sich zumindest teilweise entlang der zentralen Längsachse der jeweiligen Endabschnitte (110a, 110b) erstreckt.

5. Befestigungsklammer nach Anspruch 4, wobei das Verstärkungsrippenelement (116a, 116b) durch eine Versteifungsprägung bereitgestellt wird.

6. Befestigungsklammer nach einem der vorhergehenden Ansprüche, wobei jeder des zumindest einen ausgesparten Abschnitts (122a, 122b) an einer Seitenkante eines jeweiligen der beiden zusammenwirkenden Endabschnitte (110a, 110b) bereitgestellt ist.

7. Befestigungsklammer nach Anspruch 6, wobei der ausgesparte Abschnitt (122a, 122b) so ausgelegt ist, dass er mit einem entsprechenden Abschnitt des Installationswerkzeugs (200) eine Presspassung bildet.

8. Befestigungsklammer nach einem der vorhergehenden Ansprüche, wobei ein proximaler Rand (105) der kegelstumpfförmigen Hülse so konfiguriert ist, dass er in der vorgespannten Position mit den beiden zusammenwirkenden Endabschnitten (110a, 110b) in Anlageeingriff gelangt.

9. Befestigungsklammer nach einem der vorhergehenden Ansprüche, wobei die proximale Fläche einen vorstehenden Rand (124) aufweist, der sich zumindest teilweise entlang einer Umfangskante der Basisplatte (102) erstreckt.

10. Befestigungsklammer nach einem der vorhergehenden Ansprüche, wobei jeder der zumindest zwei diametral gegenüberliegenden elastischen Haltearme zumindest eine Öffnung (118a, 118b) aufweist, die zur Aufnahme eines entsprechenden Werkzeugs zur Demontage der Befestigungsklammer (100) von dem mit Gewinde versehenen länglichen Befestigungselement (300) ausgelegt ist.

11. Befestigungsklammer nach Anspruch 10, wobei die zumindest zwei diametral gegenüberliegenden elastischen Haltearme so ausgelegt sind, dass sie während der Demontage der Befestigungsklammer (100) von einem mit Gewinde versehenen länglichen Befestigungselement (300) eines Fahrzeugteils betriebsfähig mit einem Steckschlüsselwerkzeug in Eingriff gelangen.

12. Befestigungsklammer nach einem der vorhergehenden Ansprüche, wobei die zumindest zwei diametral gegenüberliegenden elastischen Haltearme einstückig mit der Basisplatte (102) ausgebildet sind.

13. Befestigungsklammer nach einem der vorhergehenden Ansprüche, wobei die Basisplatte (102) und die zumindest zwei diametral gegenüberliegenden elastischen Haltearme aus einem einzigen Materialstück gebildet sind.

14. Befestigungsklammer nach Anspruch 13, wobei das einzelne Materialstück ein elastisches Material ist.

## Revendications

1. Pince de fixation (100) destinée à être attachée à un élément de fixation allongé fileté (300), comprenant :
une plaque de base (102), ayant une face proximale et une face distale, comprenant un trou traversant central (104) définissant un axe central (108) et formant un manchon tronconique s'étendant en éloignement de ladite face proximale le long dudit axe central (108) et qui est configurée pour recevoir de manière guidée l'élément de fixation allongé fileté (300) ;
au moins deux bras de retenue élastiques diamétralement opposés, chacun s'étendant à partir d'un bord périphérique de ladite plaque de base (102) radialement vers l'extérieur et se repliant à l'inverse vers ledit axe central (108), afin de fournir deux portions d'extrémité (110a, 110b) coopérantes pouvant fonctionner pour se déplacer de manière élastique sensiblement parallèlement audit axe central (108) entre une position non sollicitée, où lesdites portions d'extrémité (110a, 110b) sont positionnées espacées proximalement dudit manchon tronconique, et dans laquelle lesdits bras de retenue élastiques ont un espace entre lesdites deux portions d'extrémité (110a, 110b) coopérantes définissant une liberté axiale de déplacement desdits bras de retenue élastiques, et une position sollicitée, où les portions d'extrémité (110a, 110b) sont configurés pour venir en prise de manière retenue et sollicitée avec un élément de fixation allongé fileté lors de l'insertion à travers ledit trou traversant central, et
dans laquelle chacune desdites deux portions d'extrémité (110a, 110b) coopérantes comprend en outre au moins une portion évidée (122a, 122b) adaptée pour venir en prise de manière réceptrice et attachée avec un outil d'installation (200) correspondant,
**caractérisée en ce que** l'une desdites deux portions d'extrémité (110a, 110b) coopérantes comprend au moins un organe de rampe (120) s'étendant à partir d'une extrémité distale dans une direction non parallèle à un axe longitudinal central de ladite portion d'extrémité (110a, 110b) desdits bras de retenue de manière à venir en prise de manière coulissante avec une extrémité distale de l'autre desdites deux portions d'extrémité (110a, 110b) coopérantes pendant le déplacement entre ladite position non sollicitée et ladite position sollicitée.

2. Pince de fixation selon la revendication 1, dans laquelle chacune desdites portions d'extrémité (110a, 110b) desdits bras de retenue élastiques comprend un organe de mise en prise (112a, 112b) à ladite extrémité distale adapté pour venir en prise de manière appariée avec une section de filet correspondante de l'élément de fixation allongé fileté (300).

3. Pince de fixation selon la revendication 2, dans laquelle ledit organe de mise en prise (112a, 112b) est formé par une lèvre extrudée (114a, 114b), formant un collier de serrage adapté pour s'enclencher de manière appariée avec une section de filet correspondante d'un élément de fixation allongé fileté (300), dans laquelle ladite portion de lèvre extrudée (114a, 114b) est extrudée en un collier de forme tronconique avec un bord plus étroit dudit collier de frome tronconique au niveau d'un côté proximal desdites portions d'extrémité (110a, 110b).

4. Pince de fixation selon l'une quelconque des revendications précédentes, dans laquelle chacun desdits bras de retenue comprend au moins un organe de nervure de renforcement (116a, 116b) s'étendant au moins partiellement le long dudit axe longitudinal central desdites portions d'extrémité (110a, 110b) respectives.

5. Pince de fixation selon la revendication 4, dans laquelle ledit organe de nervure de renforcement (116a, 116b) est fourni par un bossage de raidissement.

6. Pince de fixation selon l'une quelconque des revendications précédentes, dans laquelle chacune de ladite au moins une portion évidée (122a, 122b) est prévue sur un bord latéral de l'une respective desdites deux portions d'extrémité (110a, 110b) coopérantes.

7. Pince de fixation selon la revendication 6, dans laquelle ladite portion évidée (122a, 122b) est adaptée pour former un ajustement avec serrage avec une portion correspondante de l'outil d'installation (200).

8. Pince de fixation selon l'une quelconque des revendications précédentes, dans laquelle un rebord proximal (105) dudit manchon tronconique est configuré pour venir en prise en butée avec lesdites deux portions d'extrémité (110a, 110b) coopérantes dans ladite position sollicitée.

9. Pince de fixation selon l'une quelconque des revendications précédentes, dans laquelle ladite face proximale comprend un rebord saillant (124) s'étendant au moins partiellement le long d'un bord périphérique de ladite plaque de base (102).

10. Pince de fixation selon l'une quelconque des revendications précédentes, dans laquelle chacun desdits au moins deux bras de retenue élastiques diamétralement opposés comprend au moins une ouverture (118a, 118b) adaptée pour recevoir un outil correspondant pour le démontage de ladite pince de fixation (100) à partir de l'élément de fixation allongé fileté (300).

11. Pince de fixation selon la revendication 10, dans laquelle lesdits au moins deux bras de retenue élastiques diamétralement opposés sont adaptés pour venir en prise de manière fonctionnelle avec un outil à douille pendant le désassemblage de ladite pince de fixation (100) à partir d'un élément de fixation allongé fileté (300) d'une partie de véhicule.

12. Pince de fixation selon l'une quelconque des revendications précédentes, dans laquelle lesdits au moins deux bras de retenue élastiques diamétralement opposés sont solidaires de ladite plaque de base (102).

13. Pince de fixation selon l'une quelconque des revendications précédentes, dans laquelle ladite plaque de base (102) et lesdits au moins deux bras de retenue élastiques diamétralement opposés sont formés à partir d'une pièce unique de matériau.

14. Pince de fixation selon la revendication 13, dans laquelle ladite pièce unique de matériau est un matériau élastique.
